# EUROPEAN PATENT APPLICATION

(11) **EP 3 202 721 A1**
(43) Date of publication of application: **09.08.2017**
(21) Application number: 16153880.6
(22) Date of filing: 02.02.2016
(51) Int. Cl.: C02F 1/72, C02F 1/78, B01F 3/04, B01D 63/02

(54) **OZONE-BASED ADVANCED OXIDATION PROCESS**

(71) Applicant: EAWAG, 8600 Dübendorf (CH)
(72) Inventor: von Gunten, Urs, 8712 Stäfa (CH); Merle, Tony, 25490 Badevel (FR); Pronk, Wouter, 8703 Erlenbach (CH)
(74) Representative: Schneider Feldmann AG Patent- und Markenanwälte

(57) **Abstract**

The disclosed invention consists of a water oxidation method, comprising the treatment of micropollutants in bromide-containing water with ozone and hydrogen peroxide in an ozonation reactor (1), reaching reproducible low and homogenously distributed ozone concentration in the ozonation reactor. This avoids any residual of ozone in solution and therefore BrO₃⁻ formation. This goal is reached by a controlled addition of hydrogen peroxide to the water in a first step. The solution is then introduced in a multiplicity of hollow fiber membranes (20) permeable to gas, extended along the inner space (10) of the ozonation reactor (1). In parallel, ozone is added from the ozone filled inner space (10) of the ozonation reactor (1) with a controlled concentration (partial pressure?) through the hollow fiber membrane walls (200) in a homogenously distributed way without gas bubbles into the fiber compartments (201) carrying the water/hydrogen peroxide solution with an adjustable flow rate all along the entire hollow fiber membrane length (L).

## Description

### TECHNICAL FIELD

The present invention describes a water oxidation method, comprising the treatment of micropollutants in bromide-containing water by adding ozone and hydrogen peroxide in an ozonation reactor. It also describes the ozonation reactor, comprising an inner space, which is fed with ozone and a fluidtight inlet and outlet.

### STATE OF THE ART

Conventional ozonation and ozone-based advanced oxidation are two interesting processes to remove micropollutants from water, such as pesticides, pharmaceuticals or industrial chemicals and numerous studies already discussed their efficiency. The main interest of ozone-based advanced oxidation treatment is the decomposition of ozone into hydroxyl radicals (^{.}OH), which are extremely powerful oxidants reacting with organic and inorganic species.

Ozone-based advanced oxidation processes are achieved most of the time by combining ozone (O₃) and hydrogen peroxide (H₂O₂). This process is today widely used to purify drinking water or wastewater leading to the control of micropollutants in water.

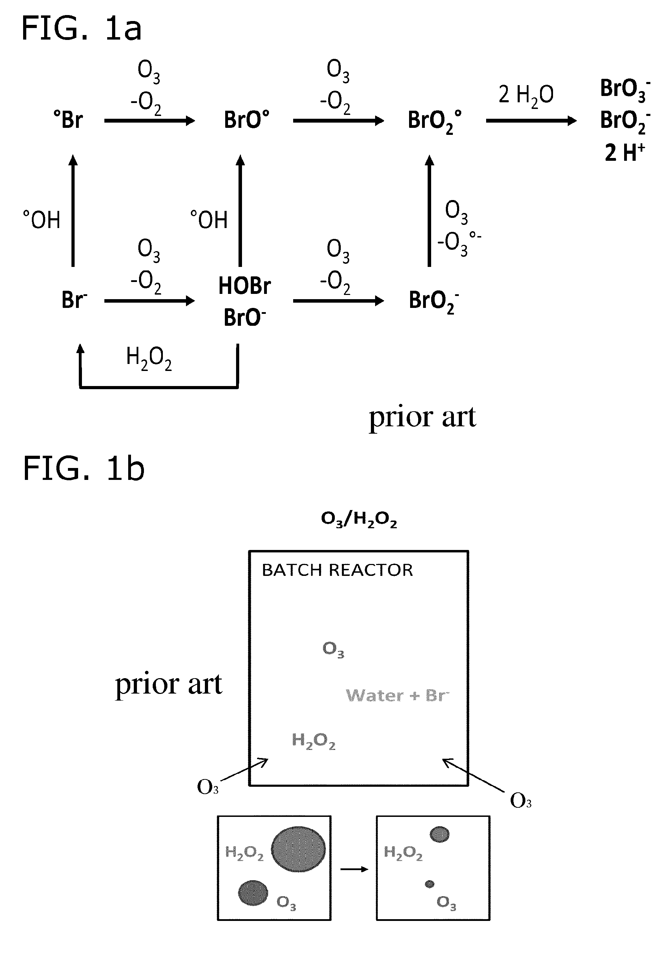

Unfortunately, it is very challenging to control bromate (BrO₃⁻) formation in both mentioned ozone treatments due to non-negligible ozone residual. BrO₃⁻ is mainly formed during ozonation of bromide-containing waters according to the simplified pathway presented in Figure 1a.

The formation of BrO₃⁻ is much lower when H₂O₂ is added to water since H₂O₂ reduces HOBr to Br⁻ and reduces the lifetime of ozone. The current standard process of the prior art is described in figure 1b. In a batch reactor or ozonation reactor, an amount of water containing micropollutants and bromide is treated with a mixture of hydrogen peroxide and ozone. In such a conventional O₃/H₂O₂ process (Figure 1b), H₂O₂ is injected in a first step before the ozonation reactor and dissolved in the water to be cleaned. Ozone is injected in a further step at one or at a few points through ozone diffusors into the ozonation reactor at a later stage. The dissolved ozone concentration is not negligible in some zones of the reactor and BrO₃⁻ formation is favored because ozone is present in sufficient concentrations.

While the removal of micropollutants might be enhanced using (O₃/H₂O₂), BrO₃⁻ formation is critical in these processes. However, it is currently impossible to avoid BrO₃⁻ formation in ozone-based advanced oxidation processes due to the simultaneous presence of ozone and hydroxyl radicals. The World Health Organization classifies BrO₃⁻ as a potential human carcinogen. Its concentration in drinking water is regulated to 10 µgL⁻¹ in most industrialized countries (European drinking water directive, USEPA Drinking Water Standards list, OSEC ordinance). Therefore, new ozone-based processes have to be found with minimum bromate formation and still efficient micropollutant abatement.

Accordingly, other approaches were investigated by turning away from ozonation and advanced oxidation processes, reducing the applied ozone doses or using pretreatments of wastewater before ozonation.

UV/H₂O₂ was identified as a good alternative treatment process to remove micropollutants in bromide-containing water without bromate formation. The main disadvantages of UV/H₂O₂ is its higher energy demand, which can be up to 20 times higher than for conventional ozonation or the combined process O₃/H₂O₂.

In 2000, researchers designed a pressurized plug flow reactor in which O₃ and H₂O₂ are injected in small quantities at different points in the reactor (US6024882). This technology helps to reduce the bromate formation but it requires a sophisticated and large system with many valves, which is subject to a lot of maintenance.

In a more recent study, US2013264292, it was shown that the formation of BrO₃⁻ might be controlled if the mixing of O₃ and H₂O₂ is optimized. Then, the two chemicals where introduced at the inlet of the reactor but not fully mixed together. Mixers are distributed at various points of the reactor and ozone gas is slowly dissolved by a sequence of static mixers to avoid high local concentrations of ozone at any point along the reaction zone.

### DESCRIPTION OF THE INVENTION

The objective of the present invention is to create a simplified method and setup for the treatment of micropollutants in bromide-containing water with ozone and hydrogen peroxide in an ozonation reactor. In such an ozonation reactor, a low and reproducible ozone dose is homogenously distributed avoiding residual ozone concentration and therefore minimizing bromate formation.

In the presented patent, O₃ is introduced in water through a porous membrane in which contaminated water and H₂O₂ are flowing. H₂O₂ is added prior to the inlet of the reactor. Thanks to this compact setup, the ozone transfer from the gas phase to the liquid phase is bubble free and can be easily optimized to avoid the formation of BrO₃⁻, while still an efficient abatement of micropollutants can be achieved.

### BRIEF DESCRIPTION OF THE DRAWINGS

A preferred exemplary embodiment of the subject matter of the invention is described below in conjunction with the attached drawings.
- Figure 1a: shows the well-known mechanism of BrO₃⁻ formation during ozonation and advanced ozonation (O₃/H₂O₂) of bromide-containing water, while
- Figure 1b: shows a schematic of the conventional advanced oxidation O₃/H₂O₂ process in a batch reactor.
- Figure 2: shows a schematic of the novel O₃/H₂O₂/membrane process.
- Figure 3a: shows a picture of the laboratory setup of the ozone membrane system for performing the novel O₃/H₂O₂/membrane process, while
- Figure 3b: shows an SEM image of a used hollow fiber membrane, while
- Figure 3c: shows a detailed SEM image of the inner membrane surface, according to the inset in figure 3b.
- Figures 4: shows some experimental results with regard to the removal of p-chlorobenzoic acid ( ozone-resistant model compound) and bromate formation in two natural matrices (Hardwald groundwater (Figure 4a) and Rhine river water (Figure 4b)) using the conventional O₃/H₂O₂ process and the novel O₃/H₂O₂/membrane process.

### DESCRIPTION

A new ozone-based advanced oxidation process combining O₃ injection in a mixture of contaminated water, containing micropollutants, H₂O₂ and Br⁻ for the treatment of micropollutants is described in the following.

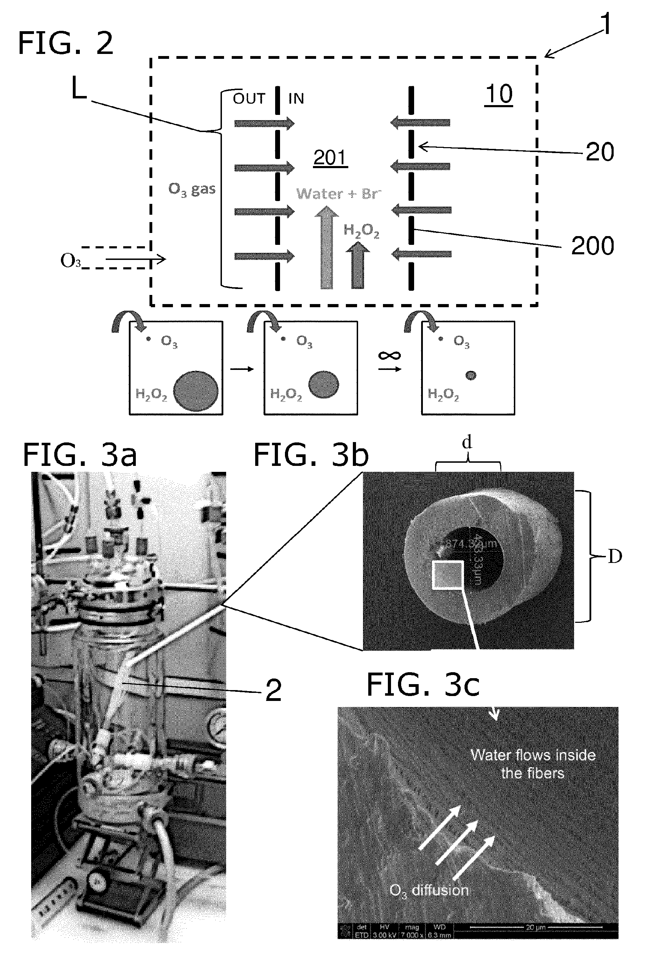

The method is carried out in an ozonation reactor 1 with an inner space 10, in which a bundle of hollow fiber membranes 20 is arranged. The ozonation reactor 1 is gastight and the inner space 10 can be fed with ozone respectively with an ozone/inert gas mixture. The ozonation reactor 1 might be a glass container as depicted in figure 3a.

A multiplicity of hollow fiber membranes 20, permeable for gas, forms a loose bundle of hollow fiber membranes 20. This is visible in figure 3a. The hollow fiber membranes 20 are flexible, do not gastight surround or enclosing each other, because they are forming a bundle. It is preferred to arrange the hollow fiber membranes 20 not concentrically without sticking together. The hollow fiber membranes 20 are arranged freely suspended for a fiber length L through the inner space 10 of the ozonation reactor. Although different membrane geometries are possible, we favor the bundle-like form, comprising a multiplicity of hollow fiber membranes 20.

The hollow fiber membrane 20 is made of a fiber wall 200 permeable for gas (in particular to O₃) and an inner fiber compartment 201 designed as a channel. For best results, the fiber length L and therewith a unconcealed part of the fiber wall 200 should be maximized. Then, the O₃ addition or injection into the fiber channel 201 from the inner space 10 is optimized and can be controlled by the O₃ partial pressure in the inner space 10.

Experiments with hollow fiber membrane diameters D below 1000µm (874 µm) and channel diameters d below 500 µm (433 µm) were done and produced good results. This can be seen in figure 3b. Fiber wall thicknesses were chosen between 200 µm and 250 µm, while the fiber channel 201 runs concentrically through the hollow fiber membrane 20. Suitable materials need a certain porosity allowing ozone molecules to diffuse.

The structure of the hollow fiber membrane 20 is polyvinylidene difluoride (PVDF) but other thermoplastic fluoropolymers or ceramic membranes are suitable.

The length L of hollow fiber membranes 20 is in the range of centimeters, so that the length / hollow fiber membrane diameter (L/D) ratio is greater than or equal to 50. To provide sufficient water flow through the fiber channel 201 and sufficient ozone addition through the fiber wall 200, the ratio of the fiber channel volume V ((πd²L)/4) / fiber wall area M (2π(D/2)L) has to be greater than 50.

The hollow fiber membranes 20 are connected together as a bundle and hold at a fluidtight inlet and outlet in the inner space 10 (Figure 3a). A solution of water and hydrogen peroxide can be transported in each fiber between the inlet and outlet.

While the mixture of water and hydrogen peroxide solution is flowing through the fiber compartment 201 without contact to the inner space 10 of the ozonation reactor 1, O₃ diffuses from the inner space 10 through the fiber walls 200 of the bundle of hollow fiber membranes 20 by adjusting the O₃ partial pressure in the inner space 10 with known means. The described method uses a diffusion driven process for addition of ozone.

In this system micropollutants are efficiently oxidized, while bromate (BrO₃⁻) formation is strongly minimized. This can be achieved by maintaining the ozone concentration in water as low as possible but high enough to form sufficient OH radicals (^{.}OH), which can oxidize the undesired micropollutants. This system can be applied to different types of bromide-containing water (e.g., groundwater, surface water, municipal and industrial wastewater, clean water production, process waters). Similar to the conventional ozone-based advanced oxidation process (O₃/H₂O₂), hydrogen peroxide (H₂O₂) has to be added to the water prior to ozone addition.

In the system described here, hollow fiber membranes 20 are used as diffusors, the ozone gas is added or injected in small portions all along the entire hollow fiber membranes 20 running in the inner space 10 of the ozonation reactor 1. Thereby, ozone can be easily dosed without gas bubbles to reach a minimal dissolved concentration by optimizing the ozone gas concentration and the residence time of water in the hollow fiber membranes 20. The ozone gas concentration in the inner space 10, the flow rate (i.e., the residence time of water in the bundle of hollow fiber membranes 20) and the hydrogen peroxide concentration are the three parameters to be optimized to avoid unnecessary ozone residual and hence bromate formation.

Ozone molecules will react with H₂O₂ to form hydroxyl radicals as soon as it has been introduced into the aqueous phase. Under these conditions (i.e., minimum necessary ozone concentration with a sufficiently high formation of ^{.}OH), bromate formation is minimized.

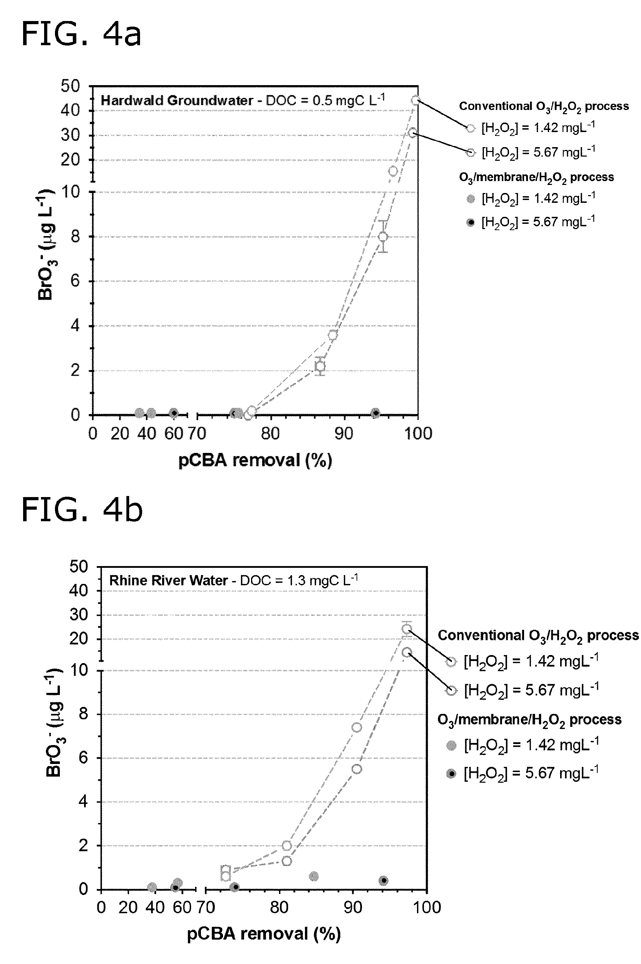

Figures 4 compares the tests performed with groundwater (Fig. 4a) and surface water (Fig. 4b) using the conventional O₃/H₂O₂ process and the novel O₃/H₂O₂/membrane system. p-chlorobenzoic acid (pCBA) was used as hydroxyl radical probe compound to test the efficiency of the advanced oxidation. The optimum treatment efficiency is achieved if pCBA is fully oxidized while the BrO₃⁻ concentration is close to 0 µgL⁻¹. For both treatments, 80% removal of pCBA can be achieved without forming more than 2 µgL⁻¹ bromate.

However, if the elimination of pCBA is targeted above 90%, a BrO₃⁻ concentration below 2 µgL⁻¹ can be guaranteed only with the O₃/H₂O₂/membrane system whereas the BrO₃⁻ concentration reaches up to 44 µgL⁻¹ for the conventional O₃/H₂O₂ treatment.

For a hydrogen peroxide dose close to the optimum (i.e., 5.7 mgL⁻¹) and a DOC concentration of 0.5 mgC L⁻¹ in the natural water, two relationships between the residence time (RT, s) and the ozone gas concentration ([O₃], g/Nm³) can be established for [O₃] ranging from 1 to 5 gNm⁻³ :
→ to reach 80% removal of pCBA:
   RT > 64.6[O₃]^{-1.32} (R² =0.948; n = 3)
→ to ensure a concentration of BrO₃⁻ below 10 µgL⁻¹:
   RT < 599.6[O₃]^{-2.58} (R² = 0.967; n = 3)
The two treatment objectives given in the above equations can only be achieved if [O₃] < 5 gNm⁻³. Above this concentration, the bromate formation will be higher than 10 µgL⁻¹ for a bromide concentration of 170 µg/L and an 80% removal of pCBA.
For H₂O₂ concentration higher than 5.7 mgL⁻¹ and an ozone gas concentration higher than 5 gNm⁻³, the ozone transfer would be too efficient, leading to significant ozone residual concentrations and hence an enhanced bromate formation. The novel process would have a similar or lower performance than a conventional process (O₃/H₂O₂).

Removal of p-chlorobenzoic acid (pCBA) and bromate formation using the conventional O₃/H₂O₂ process ([O₃] = 0.2 to 2 mg L⁻¹) and the O₃/H₂O₂/membrane process ([O₃]_{G} = 0.5 g Nm⁻³ - Q_{L} = 0.25 to 1.5 mL min⁻¹) with Hardwald groundwater (4a) and Rhine River water (4b).

Experimental conditions: Hardwald Groundwater: Br⁻ = 170 +/- 5 µgL⁻¹, pH 8.1, DOC = 0.5 mgC L⁻¹, alkalinity = 291 mgL⁻¹ as CaCO₃ - Rhine River Water: Br⁻ = 205 +/- 5 µgL⁻¹, pH 8.1, DOC = 1.3 mgC L⁻¹, alkalinity = 302 mgL⁻¹ as CaCO₃.

The presented method is interesting for the drinking water sector, especially for micropollutant removal in waters with high bromide levels. Applications to enhanced wastewater treatment can also be envisaged, since it has been discovered that bromate formation during ozonation of wastewaters can become a problem.

### LIST OF REFERENCE NUMERALS

- 1: ozonation reactor
- 10: inner space
- 2: loose bundle of hollow fiber membranes
- 20: hollow fiber membrane
- D: hollow fiber membrane diameter (< 1000um)
- 200: fiber wall (permeable to gas)
- 201: fiber compartment /channel
- d: channel diameter (< 500um)
- L: fiber length

## Claims

1. Water oxidation method, comprising the treatment of micropollutants of bromide-containing water with ozone and hydrogen peroxide in an ozonation reactor (1),
**characterized in**
- controlled addition of hydrogen peroxide to water in a first step,
- feeding the mixture of water and hydrogen peroxide through a multiplicity of hollow fiber membranes (20) permeable to gas, extending along the inner space (10) of the ozonation reactor (1), before
- ozone being added from the ozone filled inner space (10) of the ozonation reactor (1) with the actual partial pressure of ozone in the inner space (10) crossing the hollow fiber membrane walls (200) in a homogenously distributed way without gas bubbles into the fiber compartments (201) carrying the water/hydrogen peroxide solution with an adjustable flow rate all along the entire hollow fiber membrane length (L), avoiding residual ozone concentration, while a minimal necessary ozone concentration is reached during the adjusted residence time of water in the hollow fiber membranes (20).

2. Water oxidation method according to claim 1, wherein the multiplicity of hollow fiber membranes (20) forms a bundle of hollow fiber membranes (20) which are arranged non-parallel non-concentric and do not surround or enclose each other.

3. Water oxidation method according to claim 1, wherein the multiplicity of hollow fiber membranes (20) is forming a bundle of hollow fiber membranes (20) which are arranged in parallel and concentric to improve hydrodynamics.

4. Water oxidation method according to claim 1 or 2, wherein the bundle of hollow fiber membranes (20) comprises hollow fiber membranes (20) arranged freely suspended along the fiber length (L).

5. Water oxidation method according to one of the preceding claims, wherein the water to be cleaned is fed through the bundle of hollow fiber membranes (20), which is completely running through the inner space (10) of the ozonation reactor (1) between a fluidtight inlet and a fluidtight outlet of the ozonation reactor (1).

6. Water oxidation method according to one of the preceding claims, wherein the ozone addition is carried out through fiber walls (200)with thicknesses between 200 µm and 250 µm.

7. Water oxidation method according to one of the preceding claims, wherein the hollow fiber membranes (20) are made of a thermoplastic fluoropolymer, in particular made of polyvinylidene difluoride (PVDF).

8. Water oxidation method according to one of the claims 1, 3, 5 or 6, wherein the hollow fiber membranes (20) are ceramic membranes.

9. Water oxidation method according to one of the preceding claims, wherein the ozone addition is carried out through fiber channels (201) of hollow fiber membranes (20) with a ratio (V/D) greater than 50 of fiber channel (201) volume V ((πd²L)/4) to fiber wall area M (2π(D/2)L).

10. Ozonation reactor (1), comprising an inner space (10), which can be filled with ozone or an ozone/inert gas mixture, where the ozone partial pressure is carefully controllable, having a fluidtight inlet and a fluidtight outlet, **characterized in that**,
a bundle of hollow fiber membranes (20) permeable to gas, is arranged between the fluidtight inlet and the fluidtight outlet of the ozonation reactor (1) extending along the inner space (10) of the ozonation reactor (1), wherein the ozone can be added homogenously distributed and without gas bubbles through the hollow fiber membrane walls (200) into fiber compartments (201) in a controlled way by adjustment of the ozone concentration by controlling the partial pressure of ozone in the inner space (10) all along the entire hollow fiber membrane length (L).

11. Ozonation reactor (1) according to claim 10, wherein the hollow fiber membranes (20) are arranged non-parallel non-concentric and do not surround or enclosing each other.

12. Ozonation reactor (1) according to claim 10, wherein the hollow fiber membranes (20) are arranged in parallel and concentric to improve hydrodynamic.

13. Ozonation reactor (1) according to one of the claims 10 or 11, wherein the hollow fiber membranes (20) are arranged freely suspended along the fiber length (L) in the inner space (10) of the ozonation reactor (1) and the length (L) to hollow fiber membrane diameter (D) ratio (L/D) is greater than or equal to 50.

14. Ozonation reactor (1) according to one of the claims 10, 11 or 13, wherein the hollow fiber membranes (20) were made of a thermoplastic fluoropolymer, in particular made of polyvinylidene difluoride (PVDF).

15. Ozonation reactor (1) according to claim 12, wherein the hollow fiber membranes (20) were made of gas-permeable and ozone-resistant ceramic.
